# EUROPEAN PATENT APPLICATION

(11) **EP 3 425 196 A1**
(43) Date of publication of application: **09.01.2019**
(21) Application number: 17179392.0
(22) Date of filing: 03.07.2017
(51) Int. Cl.: F03D 7/02

(54) **METHOD AND TOOL FOR SERVICING A HYDRAULIC BLADE PITCH SYSTEM**

(71) Applicant: Fritz Schur Energy A/S, 2600 Glostrup (DK)
(72) Inventor: SØNDERGAARD, Peter, 8210 Århus V (DK)
(74) Representative: Guardian IP Consulting I/S

(57) **Abstract**

The present invention relates in one aspect to a method of servicing a hydraulic cylinder of a hydraulic blade pitch system on-site in an installed wind turbine. The method is for releasing the hydraulic cylinder from its articulated attachment to the corresponding mounting block without having to dismantle the mounting block. This allows for accessing the mounting point of the hydraulic cylinder for service on-site in a secure and time saving manner. According to a further aspect, an extraction tool is provided that allows for the fast and efficient extraction of the mounting point axles in an axial direction thereof. Thereby, the disassembly of the mounting blocks is avoided. Instead the mounting points of the hydraulic cylinder are disassembled on-site to release the hydraulic cylinder from its articulated attachment in the mounting block. This allows for bringing the hydraulic cylinder into a working position where the released end becomes accessible for service.

## Description

The present invention relates in one aspect to a method of servicing a hydraulic cylinder of a hydraulic blade pitch system on-site in an installed wind turbine. The blade pitch system comprising: a fixed part attached to a hub of the wind turbine, and a moveable part carrying a blade; and at least one hydraulic cylinder for actuating a rotary movement of the moveable part with respect to the fixed part around a pitch axis, wherein the hydraulic cylinder comprises at a first end a first bearing and a first axle passing through the bearing in an axial direction parallel to the pitch axis, wherein the first end by means of the first bearing and the first axle is attached to a corresponding first mounting block on one of the moveable part or the fixed part, and wherein the hydraulic cylinder comprises at a second end a second bearing and a second axle passing through the bearing in the axial direction, wherein the second end by means of the second bearing and the second axle is attached to a corresponding second mounting block on the other one of the moveable part or the fixed part. In a further aspect, the invention relates to an extraction tool for use in such a method. In a particular aspect, the invention relates to an extraction tool kit and a service kit for use in such a method.

### BACKGROUND OF THE INVENTION

A wind turbine has a rotor for converting wind energy to a rotary motion about a rotor axis. The energy from the rotary motion may be converted into useful energy by a converter, typically an electrical generator for producing electrical energy supplied to a grid. Typically, the converter and further equipment is arranged in a so-called nacelle on top of a tower. The rotor has a hub mounted to the rotor axis and at least one blade that is mounted to that hub. The hub comprises a hub housing which is typically accessible from the inside for performing service and repair work. Modern wind turbines are typically provided with a pitch system allowing for rotating the blades around a blade axis with respect to the hub. The blade axis extends radially outward with respect to the rotor axis, and follows along a longitudinal axis of the blade. The roots of the one or more blades are mounted to an attachment flange of the hub housing via the pitch system. Since the present invention is related to the actuation of the rotary pitch movement about the blade axis, the term "fixed" as used in the present application refers to fixed with respect to the hub. Accordingly, the term "moveable" refers to moveable with respect to the hub. In particular, the term "moveable" when used in the context of a pitching movement refers to a rotary motion with respect to the hub about the respective blade axis for pitch adjustment, or pitch axis. A typical pitch system comprises a pitch bearing linking a fixed part configured for coupling of the pitch system to the hub with a moveable part configured for coupling of the blade to the pitch system. Furthermore, the pitch system typically comprises an actuator for driving the pitching motion. Different actuator means are known in the art, such as electrical, hydraulic, or even electro-magnetic. The drive systems usually require further auxiliary devices, which are typically distributed throughout the hub and the nacelle. To ensure proper and safe operation of the wind turbine, regular service, maintenance and repair work has to be performed on the pitch system.

A particularly robust and reliable solution is a hydraulic pitch actuator system, and many wind turbines using hydraulic pitch systems have been installed throughout the world over the years. The reliable operation of wind turbines requires proper service throughout the entire lifespan, wherein towards the end the continued operation of the wind turbine may be conditioned by considerations of production reliability and increasing servicing costs. Once the wind turbine is no longer considered sufficiently reliable and/or cost efficient, the installed wind turbine has to be dismantled, properly scrapped, and potentially replaced by a new wind turbine. Production of a new wind turbine and dismantling of the old wind turbine entails additional cost and a non-negligible environmental foot print affecting the environmental friendliness of the energy produced over the lifespan of the wind turbine. In this context it has surprisingly turned out that servicing the hydraulic cylinders is one factor that may considerably extend the actual production lifespan of a wind turbine, even beyond the duration of the original design specification. Servicing the hydraulic cylinders of the pitch system of a wind turbine can therefore both add to the economic benefit drawn from the wind turbine and at the same time reduce the environmental impact of the production of wind energy.

A pitch system is disclosed in WO 2012069062 A1. The pitch system comprises a pitch bearing including inner and outer bearing rings. The inner ring is via a first coupling member mounted to the hub and the outer bearing ring via a second coupling member to the blade. Mounting of the blade requires access to fastening means on the outside of the hub. A hydraulic cylinder drive system is arranged on the blade side of the first coupling member facing away from the hub. Access to these hydraulic cylinders is difficult and maintenance, service, repair or replacement thereof is a very complicated operation.

In another wind turbine pitch system the hydraulic cylinders driving the pitching movement are mounted on a side of the pitch system facing towards the inside of the hub, thereby allowing for an improved access to the hydraulic system for service operations, such as maintenance, repair and replacement of hydraulic system components. Typically, each blade has a respective pitch actuator system with two hydraulic cylinders for driving the pitching movement. An example for a hydraulic system of this type is found in model Siemens SWT-2.3-VS/MKII wind turbines. However, in this pitch system priority has been given to the accessibility of the auxiliary components rather than to access to the hydraulic cylinders, since hydraulic cylinders can be provided in a long-lasting quality. The hydraulic cylinders of these systems are therefore mounted behind an infrastructure of auxiliary components, which over the lifespan of a wind turbine may require more frequent attention than the hydraulic cylinders themselves. Despite the improved accessibility of the hydraulic actuator system in this type of wind turbine, service of the hydraulic cylinders still involves complicated and time-consuming operations, which may require an entire work day for servicing one of the hydraulic cylinders. Besides the cost for the service operation itself, a tedious service procedure further entails a prolonged production down-time for the wind turbine concerned, which adds to the cost for the service operation in terms of lost income.

Therefore, there is a need for improvements to servicing operations to be performed on the hydraulic cylinders of existing wind turbines with a hydraulic pitch system.

According to one aspect, an object of the invention is to provide a method for performing a service operation on a hydraulic cylinder of a wind turbine pitch actuator system that allows for reducing down time of a wind turbine, as compared to known procedures. According to a further aspect, a further object is to provide a tool kit and a service kit facilitating such a service operation.

### SUMMARY OF THE INVENTION

The present invention is for servicing a hydraulic blade-pitch system, which comprises a fixed part attached to a hub of the wind turbine, and a moveable part carrying a blade. The blade pitch system has at least one hydraulic cylinder for actuating a rotary movement of the moveable part with respect to the fixed part around a pitch axis for adjusting blade pitch. The hydraulic cylinder, as seen in a longitudinal direction thereof, comprises a first mounting point at a first end and a second mounting point at a second end opposite of the first end. Each mounting point has an axle and a cooperating bearing, said axle passing through the bearing in an axial direction perpendicular to the longitudinal direction and parallel to the pitch axis, said axle further being received in a corresponding mounting block on one of the moveable part and the fixed part for articulated attachment of the hydraulic cylinder thereto.

According to some embodiments, the object of the invention is achieved by a method or a tool for use in said method, wherein the method or tool according to the present invention is for releasing the hydraulic cylinder from its articulated attachment to the corresponding mounting block without having to dismantle the mounting block. This allows for accessing the mounting point of the hydraulic cylinder for service on-site in a secure and time saving manner. Further according to some embodiments, the method or tool according to the present invention is for releasing the hydraulic cylinder from both its articulated attachments to the corresponding mounting blocks without having to dismantle any of the mounting blocks. This allows for accessing both mounting points of the hydraulic cylinder for service on-site in a secure and time saving manner. Furthermore, the hydraulic cylinder may be completely removed, and replaced by a replacement hydraulic cylinder without tedious disassembly of the mounting blocks or any auxiliary devices that might be attached to these.

According to a first aspect the object is achieved by a method of servicing a hydraulic cylinder of a hydraulic blade pitch system on-site in an installed wind turbine, the blade pitch system comprising:
- a fixed part attached to a hub of the wind turbine, and a moveable part carrying a blade; and
- at least one hydraulic cylinder for actuating a rotary movement of the moveable part with respect to the fixed part around a pitch axis,
   wherein the hydraulic cylinder comprises at a first end a first bearing and a first axle passing through the bearing in an axial direction parallel to the pitch axis, wherein the first end by means of the first bearing and the first axle is attached to a corresponding first mounting block on one of the moveable part or the fixed part, and
   wherein the hydraulic cylinder comprises at a second end a second bearing and a second axle passing through the bearing in the axial direction, wherein the second end by means of the second bearing and the second axle is attached to a corresponding second mounting block on the other one of the moveable part or the fixed part;
the method comprising the steps of:
- expanding the hydraulic cylinder;
- thereafter removing the first axle from the first bearing in the axial direction through the corresponding first mounting block; and
- thereafter contracting the hydraulic cylinder so as to release the first end from the corresponding first mounting block in a direction perpendicular to the axial direction.

The expression "on-site in a wind turbine" means that the actual service procedure is to be performed on the blade pitch system as it is installed in the rotor of a wind turbine, on location where the wind turbine is installed and without taking off the respective blades from the rotor. It should be noted that the hydraulic blade pitch system has at least one hydraulic cylinder per blade. The at least one hydraulic cylinder acts as drive member for actuating the pitch movement of the blade pitch system. A typical blade pitch system has two hydraulic cylinders per blade. A wind turbine with a three-bladed rotor therefore has typically six hydraulic cylinders working together to simultaneously adjust the blade pitch of all three blades in a synchronized manner. Each hydraulic cylinder has a mounting point attached to a corresponding mounting block at either end. Servicing the hydraulic cylinders of the rotor of a typical wind turbine therefore requires unmounting, reinstallation and any further service procedures related to the articulated attachment of the hydraulic cylinders twelve times per wind turbine. A considerable saving in the service time for each of the articulated attachment points therefore results in a significant saving in terms of cost for qualified service personnel, equipment rental, such as cranes or boat rental for off-shore wind turbines, as well as in terms of cost for lost production time.

The following terms are used herein, for describing the components of the hydraulic cylinder. The hydraulic cylinder comprises a barrel with a bore in which a piston may travel back and forth in a longitudinal direction of the hydraulic cylinder under the influence of a pressurized fluid. A cylinder bottom closes a bottom of the barrel at one end of the barrel as seen in the longitudinal direction, and a cylinder head closes a head of the barrel at the opposite end of the barrel as seen in the longitudinal direction. The piston is connected to a piston rod extending in the longitudinal direction through the cylinder head out of the barrel, thereby transmitting the linear movement of the piston to the outside of the barrel. The cylinder bottom, also referred to as the bore end of the hydraulic cylinder, carries a bore end mounting eye. Correspondingly, the piston rod carries a rod end mounting eye at the end of the rod projecting out of the barrel, also referred to as the rod end of the hydraulic cylinder. The mounting eyes are for receiving respective bearings and bearing axles forming connection points for connecting the hydraulic cylinder to respective brackets on the fixed and moveable parts of the pitch system for converting the linear expansion and contraction of the one or more hydraulic cylinders into a corresponding rotary movement for the adjustment of the blade pitch.

Unmounting a first one of the bearing axles from the corresponding first end of the hydraulic cylinder and releasing that first end from its mounting block allows for servicing the hydraulic cylinder, the bearing, and the mounting block at that end.

The hydraulic cylinder bearings including the bearing axles are commonly factory-mount as an integrated part forming the connection point of the heavy duty hydraulic cylinders employed in pitch systems as installed in existing wind turbines. The mounting blocks receiving the connection points of the hydraulic cylinder are therefore designed for disassembly by means of nut/bolt connections. Servicing the hydraulic cylinders thus usually requires disassembly of the mounting block to unmount the hydraulic cylinder.

Surprisingly despite this fact it turns out that it is possible to avoid disassembly of the mounting block for unmounting the hydraulic cylinder, and instead remove the respective bearing axle from the connection point of the hydraulic cylinder directly on-site in the hub of the installed wind turbine.

Further surprisingly it turns out that this procedure is considerably faster than unmounting the hydraulic cylinder by disassembly of the mounting blocks as designed. This relies on the inventive insight that the removal of the bearing axle can be performed in a more space saving way, e.g. by means of a suitable extraction tool, thereby further avoiding the unmounting of otherwise interfering elements, such as auxiliary infrastructure mounted on top and in front of the hydraulic cylinder assembly.

Unmounting a first one of the bearing axles from the corresponding first end of the hydraulic cylinder and releasing that first end from its mounting bracket allows for servicing the hydraulic cylinder, the bearing, and the bracket seating at the first end on-site in the hub of the wind turbine.

It should be noted that safety procedures for rotor service involving operations performed on-site in a wind turbine require bringing the blade pitch to a stall position and typically further require engaging a locking mechanism that prevents the blade pitch system from moving. For safety reasons, the method is therefore only applicable to blade pitch system designs where the one or more hydraulic cylinders are in an at least partially expanded state when the blade pitch system is in the stall position.

Further according to one embodiment, the method further comprises the steps of:
- removing the second axle from the hydraulic cylinder in the axial direction through the corresponding second mounting block; and
- thereafter releasing the second end from the second bracket in a direction perpendicular to the axial direction.

Unmounting the second bearing axles from the corresponding second end of the hydraulic cylinder in the axial direction and thereafter releasing also that second end from its mounting bracket in a direction perpendicular to the axial direction allows for removing the entire hydraulic cylinder, e.g. for working on the hydraulic cylinder on-site, or for rapid replacement of the hydraulic cylinder with a replacement hydraulic cylinder. On-site work on the second end may e.g. include servicing the hydraulic cylinder, the bearing, and the bracket seating at the second end. For the same reasons as discussed above with respect to the first end, this method of unmounting also the second end of the hydraulic cylinder from its corresponding mounting block results in a surprising reduction in service time, amongst others because it allows for keeping auxiliary devices attached to the mounting blocks in place.

Further according to one embodiment of the method, the step of removing the first axle and/or the second axle from the hydraulic cylinder includes using an extraction tool, wherein the extraction tool comprises:
- an actuator element adapted to exert an actuating force by deploying a primary surface with respect to a secondary surface in a tool deployment direction; and
- one or more adapter elements;
whereby the extraction tool is adapted to seat against the corresponding first or second mounting block, to engage one of the first axle or the second axle, to convert an actuation force exerted by the actuator element into a pulling force, and to apply the pulling force to said first or second axle in the axial direction thereof.

The actuator element of the extraction tool has a primary surface and a secondary surface oriented opposite to the primary surface. The primary and secondary surfaces are therefore oriented with their surface normal parallel to the tool deployment direction. Deployment of the primary surface away from the secondary surface exerts an actuation force in a pushing stroke. The subsequent retraction of the primary surface towards the secondary surface results in a recovery stroke. The adapter elements are for converting and transmitting the actuation forces from the actuator element as axially oriented forces to the mounting point axles to be removed on-site. More generally, appropriate adapter elements may be provided for converting and transmitting the actuation forces from the actuator element as axially oriented forces to the mounting point axles and bearings of the hydraulic cylinder to be removed and/or (re-)installed for service by means of the extraction tool, without dismantling the mounting blocks on the fixed and/or moveable parts of the blade pitch system, in the particular manner as further detailed below.

Further according to some embodiments of the method, the actuator element is a hydraulic actuator element. This has the advantage that the extraction tool can be configured as a mobile device and in a particularly space saving manner, yet providing/generating sufficient forces for performing the required service operations on-site in the hub of a wind turbine rotor. As also further detailed below, an annular shaped hydraulic actuator element with a central hole for passing a central tool bolt there through, in a direction parallel to the tool deployment direction is particularly advantageous. Typically, the hydraulic actuator element includes appropriate pressurizing means operable on-site by a service technician, such as a hand pump. Thereby an autonomous extraction tool is provided that is independent of any work-shop or factory infrastructure, which is particularly useful for the field of application of the present invention, i.e. on-site service of the hydraulic pitch system in an installed wind turbine.

The method using the extraction tool, and in particular using the extraction tool with a hydraulic actuator device, is particularly useful when performing the following service procedures: removal of the first and second axles; installation of the first and second axles; removal of the first and second bearings; and insertion of the first and second replacement bearings. The extraction tool is configured for the different procedures using appropriate adapter elements.

According to some embodiments of the method, the step of removing the first axle from the hydraulic cylinder includes:
- engaging the first axle with the extraction tool;
- seating the extraction tool against the corresponding first mounting block; and
- actuating the extraction tool so as to remove the first axle from its seat in the first bearing in the axial direction.

According to some embodiments of the method, the step of removing the second axle from the hydraulic cylinder includes:
- engaging the second axle with an extraction tool;
- seating the extraction tool against the corresponding second mounting block; and
- actuating the extraction tool so as to remove the second axle from its seat in the second bearing in the axial direction.

According to some embodiments, the method is further adapted for installing the first and/or second axles, wherein the method further includes steps of:
- placing the first or second end of the hydraulic cylinder with the respective first or second bearing inserted therein in the corresponding mounting block from a lateral direction perpendicular to the pitch axis;
- placing a first or second axle in axial orientation parallel to the pitch axis adjacent to the corresponding first or second mounting block;
- seating the extraction tool on the axle in question;
- engaging the corresponding first or second mounting block with the extraction tool; and
- actuating the extraction tool so as to insert the first or second axle into the corresponding first or second mounting block and further into the respective first or second bearing in the axial direction.
Typically, the axles are thereby brought into a press-fit engagement with their respective seats, and may further be secured with a securing bolt. Installing the first and/or second ends of a hydraulic cylinder in the corresponding first and/or second mounting blocks of the pitch system is advantageously performed using the extraction tool with appropriate adapter elements for applying the actuating force, exerted by the actuator element, as a driving force for inserting the first and/or second axles through the corresponding mounting block into the respective first and/or second bearings in the axial direction.

According to some embodiments, the method further comprises the steps of:
- engaging the first bearing with the extraction tool;
- seating the extraction tool against a first bearing seat holding the first bearing in the first end of the hydraulic cylinder; and
- actuating the extraction tool so as to remove the first bearing from the first bearing seat in the axial direction.

According to some embodiments, the method further comprises the steps of:
- placing a first replacement bearing next to the first bearing seat;
- engaging the first replacement bearing with the extraction tool;
- seating the extraction tool against the first bearing seat; and
- actuating the extraction tool so as to insert the first replacement bearing into the first bearing seat in the axial direction.

According to some embodiments, the method further comprises the steps of:
- engaging the second bearing with the extraction tool;
- seating the extraction tool against a second bearing seat holding the second bearing in the second end of the hydraulic cylinder; and
- actuating the extraction tool so as to remove the second bearing from the second bearing seat in the axial direction.

According to some embodiments, the method further comprises the steps of:
- placing a second replacement bearing next to the second bearing seat;
- engaging the second replacement bearing with the extraction tool;
- seating the extraction tool against the second bearing seat; and
- actuating the extraction tool so as to insert the second replacement bearing into the second bearing seat in the axial direction.

Thereby, a set of service procedures for the hydraulic cylinders of blade pitch systems is provided that can be performed on-site in a particularly time and cost-efficient manner reducing the service time to half the time of previously employed procedures involving unmounting auxiliary devices and the disassembly of the mounting blocks receiving the mounting points of the hydraulic cylinders.

According to a further aspect of the invention, an extraction tool for use in a method of servicing a hydraulic cylinder of a hydraulic blade pitch system on-site is provided, the extraction tool comprising an actuator element adapted to exert an actuating force by deploying a primary surface with respect to a secondary surface in a tool deployment direction; and one or more adapter elements, whereby the extraction tool is adapted to seat against or otherwise engage the corresponding first or second mounting block and to transmit an actuating force as an axially directed force to the first or second axle.

A set of one or more adapter elements may be for applying an axial pulling force to the first or second axle for removal thereof, and a further set of one or more adapter elements may be for applying an axial pushing force to the first or second axle for installation thereof. Further sets of adapter elements may be for the removal of the first and second mounting point bearings of the hydraulic cylinder, and for the installation of first and second replacement bearings.

As mentioned above, the actuator element has a primary surface and a secondary surface oriented opposite to the primary surface. Preferably, the actuator element is a hydraulic device. Upon actuation, the primary surface of the hydraulic device is deployed in a direction away from the secondary surface. The actuator element is thus configured for exerting a pressing or pushing force. The pushing force may be converted into a pulling force by means of appropriate adapter elements. Further advantageously, the actuator element comprises a reversal valve and further hydraulic infrastructure allowing for retracting the primary surface back towards the secondary surface. The actuator element may thus be operated to-and-fro in a cyclic manner to deploy the primary surface in a pushing/pressing stroke, retract the primary surface in a recovery stroke, and then again perform a new cycle of pushing and recovery. In the case a service procedure requires an axial travel that is longer than the stroke length of the actuator, a plurality of cyclic strokes may be applied repetitively, where the adapter elements are readjusted to meet the actuator element after each recovery stroke and before applying the next pushing stroke. In fact, the actuator may thus be designed for a stroke length, which is a fraction of the travel required for the service procedure. Thereby, a compact, yet powerful extraction tool may be provided, which has the advantage of improving the mobility of the tool for on-site use, and further has the advantage of improving the usability of the extraction tool in narrow spaces for performing the service procedures on-site in a wind turbine rotor hub, e.g. behind a bracket carrying auxiliary devices.

According to a particularly advantageous embodiment of the extraction tool, the actuator element is an annular hydraulic actuator element with a central hole. The annular shape allows for using a central tool bolt as an adapter element that, at a proximal end, can engage the primary surface, and passing through the central hole, can transmit a pushing force exerted by the primary surface to the other side of the secondary surface in a direction opposite to the tool deployment, where a distal end of the central tool bolt can engage the item to be extracted, e.g. the first axle or the second axle. Using the central tool bolt as one of the one or more adapter elements, a pushing force may thus be converted into a pulling force that can be applied to pull out e.g. an axle in the axial direction thereof. The pulling force is countered by the secondary surface, which is seated on the corresponding mounting block surrounding the axle, typically by means of a ring- or tube-shaped distance piece placed such that a distal end of the distance piece rests on an outwardly oriented surface of the mounting block, and further such that a proximal end of the distance piece provides a resting surface for the secondary surface of the actuator element. Typically, a distance piece for use in an extraction procedure provides an inner volume that is shaped and dimensioned with an inner diameter and a length in the axial direction that allows for receiving the item to be extracted therein.

Preferably, the extraction tool is provided in an extraction tool kit comprising a hydraulic actuator element and one or more adapter elements for one or more different on-site service procedures. Thereby, a convenient tool set for on-site service of hydraulic blade pitch system is provided. Preferably, the hydraulic actuator element is the same for all procedures to be performed with the extraction tool kit, thereby considerably reducing the complexity and cost of the tool kit in addition to reducing the weight to be lifted to the point of on-site service in the wind turbine.

Advantageously according to some embodiments, an extraction tool kit may, in addition to the common actuator element, comprise adapter elements for use in multiple different, and preferably all, of the on-site service procedures described herein. This has the practical advantage of being able to perform all these procedures on-site using the same extraction tool that is merely re-configured for the different procedures by means of the appropriate adapter elements included in the kit. Thereby, a comprehensive extraction tool kit is provided, where the amount of equipment to be lifted up to the top of the wind turbine for performing the on-site service is reduced to a minimum and valuable service time is saved.

According to some embodiments of the invention, an extraction tool kit comprises:
- an annular hydraulic actuator element with a central hole oriented in the tool deployment direction;
- a first tool bolt with a proximal end adapted to engage the primary surface of the actuator element, with a diameter adapted to pass through the central hole in the annular actuator element, and a distal end adapted for attachment to the first axle, e.g. in a threaded engagement; and
- a first tube-shaped distance piece with a distal end adapted to seat against the corresponding first mounting block, and a proximal end adapted to provide a seating for the secondary surface of the actuator element, wherein the distance piece is shaped and dimensioned to receive the first axle therein.
Thereby a particularly efficient extraction tool is provided, which is at least useful for a procedure of removing the first axle.

Further according to some embodiments, the extraction tool kit comprises:
- a second tool bolt with a proximal end adapted to engage the primary surface of the actuator element, with a diameter adapted to pass through a central hole in the annular actuator element, and a distal end adapted for attachment to the second axle, e.g. in a threaded engagement; and
- a further tube-shaped distance piece with a distal end adapted to seat against the corresponding second mounting block, and a proximal end adapted to provide a seating for the secondary surface of the actuator element, wherein the distance piece is shaped and dimensioned to receive the second axle therein.
Thereby a particularly efficient extraction tool is provided, which is useful for a procedure of removing the second axle, in the same manner as for the first axle removal.

Further according to some embodiments, the first and the further tube-shaped distance pieces are one and the same (first) tube-shaped distance piece. Thereby, a further convenient and furthermore space and weight saving tool kit is provided, reducing the amount of equipment to be lifted to the nacelle and into the hub of the wind turbine where service on the blade pitch system is to be performed. Accordingly, an extraction tool kit may comprise the annular hydraulic actuator element, the first tube-shaped distance piece, the first central tool bolt, and the second tool bolt. Thereby the extraction tool kit is at least adapted for the on-site procedures of first and second axle removal.

Advantageously, the extraction tool kit may further be adapted for use in re-installing the first and/or the second end of the hydraulic cylinder in the corresponding first and/or second mounting blocks of the blade pitch system, or for installing a replacement hydraulic cylinder by installing first and second ends of the replacement hydraulic cylinder in the corresponding first and/or second mounting blocks after the original hydraulic cylinder has been removed. Advantageously, the replacement hydraulic cylinder does not include pre-installed mounting point axles. Advantageously, the replacement hydraulic cylinder includes mounting point bearings. Otherwise, the above-mentioned method steps according to some embodiments of the present invention for inserting first and/or second replacement bearings may be performed on-site prior to installing the replacement hydraulic cylinder in the blade pitch system.

Further according to some embodiments, the adapter elements for re-installing the first and second axles include a third tool bolt adapted to pass through the axle and for engaging attachment means, such as a threaded hole, provided in the bottom of the mounting block lumen receiving the first or second axle. Alternatively or in addition thereto, the adapter elements for re-installing the first and second axles may include an offset bridge with attachment bushings adapted for attachment to axially projecting mounting block assembly bolts at the top of the mounting block, arranged adjacent to the lumen in the mounting block for receiving the respective first or second axle. Accordingly, an extraction tool kit may comprise the annular hydraulic actuator element, the third tool bolt and/or the offset bridge with attachment bushings. Thereby the extraction tool kit is at least adapted for the on-site procedures of re-installing the first and second axles.

Further according to some embodiments, an extraction tool kit with an annular hydraulic actuator element may comprise as adapter elements for a procedure of removing the first bearing:
- a bearing plate with an outer diameter corresponding to the outer diameter of the first bearing;
- a fourth tool bolt with a proximal end adapted to engage the primary surface of the actuator element, and a distal end adapted for engaging the bearing plate, and with a diameter adapted to pass through the central hole in the annular actuator element and through the first bearing when the respective first axle is removed; and
- a second tube-shaped distance piece with a distal end adapted to seat against the first end of the hydraulic cylinder, and a proximal end adapted to provide a seating for the secondary surface of the actuator element, wherein the second distance piece is shaped and dimensioned to receive the first bearing therein.
Thereby the extraction tool kit is at least adapted for the procedure of removing the first bearing.

Further according to some embodiments, an extraction tool kit with an annular hydraulic actuator element may comprise adapter elements for a procedure of inserting the first replacement bearing. Advantageously the same bearing plate and central tool bolt as for removing the first bearing may also be used for inserting the first replacement bearing by pulling the first replacement bearing in place from a side opposite to where the extraction tool is seated against the first bearing seat. Instead of the relatively long second distance piece, a shortened third distance piece, which is not adapted to receive a bearing therein may therefore be sufficient. The extraction tool kit with an annular hydraulic actuator element may thus comprise the bearing plate, the fourth tool bolt, and one or both of the second and the third distance pieces. Thereby the extraction tool kit is at least adapted for the procedure of inserting the first replacement bearing.

An extraction tool kit with an annular hydraulic actuator element may further comprise the adapter elements required for a procedure of removing the second bearing analogue to the adapter elements used for removing the first bearing. Thereby the extraction tool kit is at least adapted for the procedure of removing the second bearing. Typically, the relevant dimensions of the bearings and bearing seats employed at either end of the hydraulic cylinder are the same and therefore the same adapter elements may in fact be used for the second bearing removal as for the first bearing removal.

An extraction tool kit with an annular hydraulic actuator element may further comprise the adapter elements required for a procedure of inserting the second replacement bearing analogue to the adapter elements used for inserting the first replacement bearing. Thereby, the extraction tool kit is at least adapted for the procedure of inserting the second replacement bearing. As mentioned, the relevant dimensions of the bearings and bearing seats employed at either end of the hydraulic cylinder are typically the same and therefore the same adapter elements may in fact be used for inserting the second replacement bearing as for inserting the first replacement bearing.

Advantageously according to some embodiments, a comprehensive extraction tool kit includes:
- the annular hydraulic actuator element, preferably with pressurizing means for the exertion of an actuation force;
- the first tube-shaped distance piece, the first tool bolt, and the second tool bolt, for removal of the first and second axles;
- the third tool bolt, and the offset bridge with attachment bushings for the installation of the first and second axles; and
- the bearing plate, the fourth tool bolt, the second distance piece, and the third distance piece for the removal of the first and second bearings and for the insertion of the first and second replacement bearings.
Thereby the comprehensive extraction tool kit is at least adapted for the procedures of first and second axle removal, first and second axle mounting, first and second bearing removal and for the insertion of first and second replacement bearings. The comprehensive extraction tool kit is particularly convenient for performing on-site service on the mounting points of the hydraulic cylinders of a hydraulic blade pitch system in a secure and surprisingly time saving manner.

According to a further aspect of the invention, a service kit is provided, the service kit comprising an extraction tool kit according to any one of the herein-mentioned embodiments, the service kit further comprising replacement parts including one or more of: a first replacement bearing for replacing a first mounting point bearings; a second replacement bearing for replacing a second one of the mounting point bearings; and a replacement hydraulic cylinder for replacing the hydraulic cylinder of the blade pitch system. Advantageously, the replacement hydraulic cylinder has first and/or second replacement bearings pre-installed in the respective first and second mounting points at the first and second ends of the hydraulic cylinder. Further advantageously, first and second mounting point axles are not pre-installed in the replacement hydraulic cylinder.

Further according to some aspects, the invention may also equivalently be exercised by providing spare parts for a hydraulic cylinder of a blade pitch system of a wind turbine rotor, in combination with instructions for servicing said hydraulic cylinder on-site according to any of the method steps disclosed herein, and/or in combination with instructions referring to steps of servicing a blade pitch system according to any of the procedures disclosed herein, and/or in combination with instructions referring to an extraction tool according to any of the embodiments disclosed herein. Furthermore, a use of or an instruction to use an extraction tool kit according to any of the embodiments disclosed herein in a method of servicing a blade pitch system, such as according to any of the procedures disclosed herein, is equally considered to fall within the scope of the present invention.

### BRIEF DESCRIPTION OF THE DRAWINGS

Preferred embodiments of the invention will be described in more detail in connection with the appended drawings, which show in
- Fig. 1: schematically, a wind turbine at a site of installation;
- Fig. 2: a top elevational schematic view of a hydraulic pitch actuator with auxiliary components removed; and in
- Figs. 3-8 A/B: schematic renderings of the extraction tool as configured for and applied in different on-site service procedures in (A) a perspective, and (B) a cross-sectional view.

### DETAILED DESCRIPTION

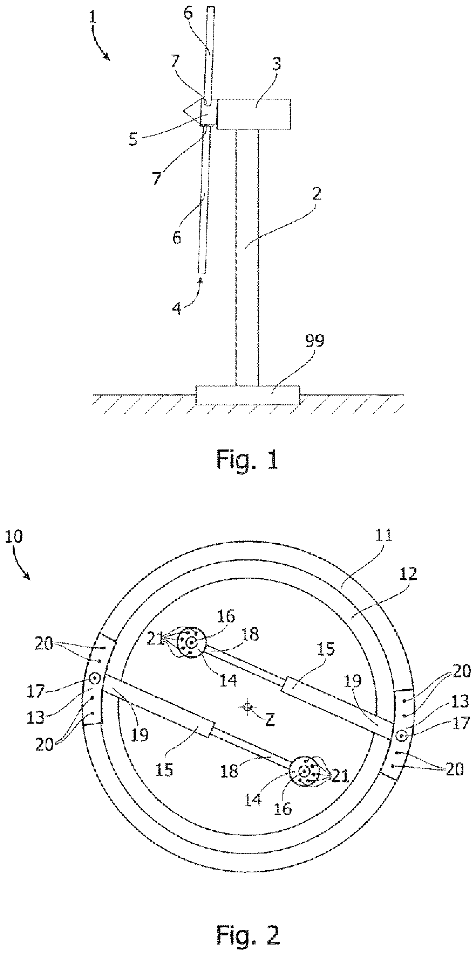

Referring to Figs. 1 and 2, the specific context of the present invention, i.e. of on-site service on the blade pitch system of a wind turbine is illustrated.

Fig. 1 shows a schematic of a wind turbine 1 installed at an installation site. The wind turbine 1 has, on a foundation 99, a tower 2, and on top of the tower 2 a nacelle 3 for housing a generator and infrastructure. The nacelle 3 carries a rotor 4 with a hub 5 to which a number of blades 6, typically three blades, are attached. At the root end of the blades 6, a rotatable mount is provided allowing each of the blades to rotate around a respective blade pitch axis Z, which essentially corresponds to the longitudinal axis of the blade. The rotatable mount is part of a blade pitch system 7 for adjusting blade pitch. The blade pitch system is hydraulic, which means that the adjustment is actuated by means of hydraulic drive members.

Fig. 2 shows schematically a blade pitch actuator 10 of a hydraulic pitch system 7 with auxiliary devices removed. The blade pitch actuator 10 has a fixed part 11 attached to the hub, and a moveable part 12 to which the blade 6 is attached. The moveable part 12 is rotatable with respect to the fixed part 11 around the blade pitch axis Z oriented perpendicular to the plane of the blade pitch actuator 10, i.e. here perpendicular to the plane of the drawing. The rotation may be actuated by means of two hydraulic cylinders 15, which are in an expanded position, when the blade pitch is adjusted to a stall position. Each of the hydraulic cylinders 15 has a barrel with a bore 19 in which a piston may travel in a longitudinal direction under the influence of pressurized fluid. The piston is connected to a rod 18 extending in the longitudinal direction out of the bore 19. At the bore end, the hydraulic cylinder 15 has a bore end mounting point, which via a bearing (not seen here) and an axle 17 is connected to a mounting block 13 on the fixed part 11 of the blade pitch actuator 10. At the rod end, the hydraulic cylinder 15 has a rod end mounting point, which via a bearing (not seen here) and an axle 16 is connected to a mounting block 14 on the moveable part 12 of the blade pitch actuator 10. The axles 16 and 17 are parallel to the blade pitch axis Z, so as to allow for an articulated sweeping movement of the hydraulic cylinder with respect to the fixed and moveable parts, in a plane parallel to that of the blade pitch actuator 10. The mounting blocks 13, 14 have respective top and bottom brackets that are held together by axially extending mounting block assembly bolts 20, 21. The mounting blocks 13, 14 are thus designed to be disassembled for unmounting the hydraulic cylinders 15 from the blade pitch actuator 10 for service.

By providing a method and an extraction tool for use in this method according to the present invention, which allows for the fast and efficient extraction of the mounting point axles in an axial direction thereof, the disassembly of the mounting blocks is avoided. Instead the mounting points of the hydraulic cylinder are disassembled on-site to release the hydraulic cylinder from its articulated attachment in the mounting block. This allows for bringing the hydraulic cylinder into a working position where the released end becomes accessible for service. The respective ends of the hydraulic cylinder may be unmounted, serviced, and remounted one at a time e.g. in order to replace the respective mounting point bearing of the hydraulic cylinder. Alternatively they may be unmounted both for removing the hydraulic cylinder from the blade pitch system, e.g. for on-site service or for replacement by a replacement hydraulic cylinder.

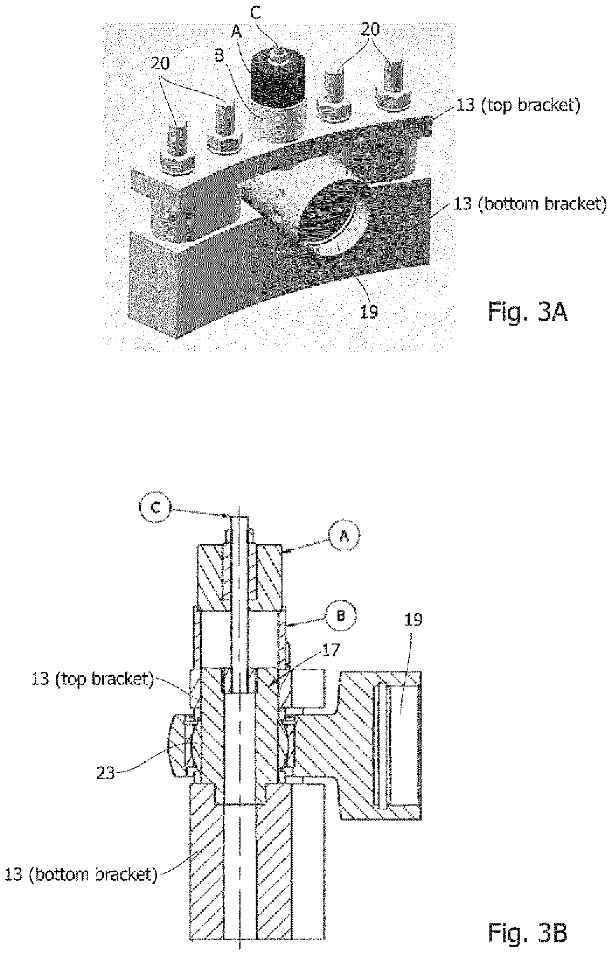

Referring to Figs. 3-8 in the following, different configurations of an extraction tool are now described, as applied in different on-site service procedures of axle removal, bearing removal and replacement, and axle mounting according to some embodiments of the method of the invention, wherein (A) shows a schematic perspective and (B) shows a cross-sectional rendering of the extraction tool as applied in the respective procedure.

The blade of the pitch actuator, which is serviced from inside the hub, is typically positioned to point in a downward direction. In some cases, however, it may be required to get to the blade side of the pitch actuator during the service procedure. For safety reasons, this is done by turning the rotor such that the respective blade points upwards, while accessing the blade side of the pitch actuator. After this, the blade is moved back to point in a downward direction again.

The extraction tool may advantageously be part of a comprehensive extraction tool kit. The extraction tool it comprises a hydraulic actuator tool A with a primary surface that can be deployed in a tool deployment direction away from the secondary surface. The secondary surface is parallel to and oriented opposite to the primary surface. The deployment is actuated by a mobile pressurizing means, here a hand pump forming part of the extraction tool kit. The actuator element is thereby adapted to exert a pushing actuating force in the tool deployment direction. Flipping a valve, the deployment may be reversed to retract the primary surface back towards the secondary surface. The hydraulic actuator tool A has an annular design with a central hole that is oriented in the tool deployment direction.

The comprehensive extraction tool kit further comprises all the adapter elements (B, C, D, E, F, G, H, I, J, K) for configuring the extraction tool according to any of the procedures as described in the following.

Adapter element B is a first tool bolt with a proximal end adapted to engage the primary surface of the actuator element A, with a diameter adapted to pass through the central hole in the annular actuator element A, and a distal end adapted for attachment to the bore end axle 17 in a threaded engagement.

Adapter element C is a first tube-shaped distance piece with a distal end adapted to seat against the bore end mounting block 13, and a proximal end adapted to provide a seating for the secondary surface of the actuator element A, wherein the distance piece C is shaped and dimensioned to receive the bore end axle 17 therein.

Adapter element D is a second tool bolt with a proximal end adapted to engage the primary surface of the actuator element A, with a diameter adapted to pass through the central hole in the annular actuator element A, and a distal end adapted for attachment to the rod end axle 16 in a threaded engagement.

Adapter element E is a third tool bolt adapted to pass through a central lumen in the rod end axle 16 and for engaging a thread provided in the bottom of the rod end mounting block 14 lumen for receiving the rod end axle 16.

Adapter element F is an offset bridge with attachment bushings (adapter elements G) adapted for attachment to axially projecting mounting block assembly bolts 20 at the top of the bore end mounting block 13, arranged adjacent to the lumen in the bore end mounting block 13 for receiving the bore end axle 17.

Adapter element H is a second tube-shaped distance piece with a distal end adapted to seat against the bore end and/or against the rod end of the hydraulic cylinder 15, and a proximal end adapted to provide a seating for the secondary surface of the actuator element A, wherein the second distance piece H is shaped and dimensioned to receive the rod end bearing 22 and/or the bore end bearing 23 therein.

Adapter element I is a fourth tool bolt with a proximal end adapted to engage the primary surface of the actuator element A, and a distal end adapted for engaging a bearing plate (adapter element J), and with a diameter adapted to pass through the central hole in the annular actuator element A and through the rod end bearing 22 and/or the bore end bearing 23 when the respective axle 16, 17 is removed.

Adapter element J is a bearing plate with an outer diameter corresponding to the outer diameter of the rod end bearing 22 and/or of the bore end bearing 23.

Adapter element K is a third, ring-shaped distance piece corresponding to the second tube-shaped distance piece H, but which is shortened with respect to the second tube-shaped distance piece H.

Fig.3A/B shows removal of the mounting point axle 17 at the bore end. The extraction tool for removal of the mounting point axle 17 at the bore end 19 comprises the annular actuator tool A, the first tool bolt B, and the first tube-shaped distance piece C.

All auxiliary devices in the hub are left in their position and only a middle bolt, holding the bore end axle 17 in position is untightened. The first tool bolt C is placed to engage the top of the axle 17. The first distance piece B is then placed concentric around the first tool bolt C and on top of the top bracket of the bore end mounting block 13. Finally, the actuator element A is placed on top of the first distance piece B and an engagement nut on the first tool bolt C is tightened to meet the actuator element.

The extraction tool thus rests against bore end mounting block 13. The bore end mounting block 13 acts as pushing force uptake providing a counterforce against the exertion of a pushing force from the secondary surface of the hydraulic actuator element A. The primary surface is deployed with respect to the secondary surface thus seated. The first tool bolt C extends from the primary surface through the central hole of the actuator element A, to the bore end axle 17. The tool deployment direction is aligned with the axial direction of the bore end axle 17, which is parallel to the blade pitch axis Z, and the first tool bolt C is arranged parallel to the tool deployment direction so as to apply a pulling force to the bore end axle 17 in the axial direction thereof. The pulling force is for removing the bore end axle 17 from the bore end bearing 23 in the axial direction through the top bracket of the mounting block 13, i.e. without dismantling the bore end mounting block 13. Thereby, the disassembly of the mounting block 13, and of any auxiliary devices attached thereto, is avoided, thereby saving a considerable amount of time and effort.

When pressurized, the actuator element A will deploy the primary surface 20 mm with respect to the secondary surface, thus pulling out the axle of the bottom plate and the cylinder bearing. The actuator element A is retracted to start position again (using the hand pump in opposite direction), the engagement nut of the first tool bolt C is tightened again and the cycle is repeated, e.g. 3-4 times, until the bore end axle 17 is fully released and can be removed.

When the bore end axle 17 is removed, the bore end 19 of the hydraulic cylinder 15 can be retracted using the hydraulic pressure in the blade pitch system, thereby releasing the bore end of the hydraulic cylinder 15 from the corresponding mounting block 13 in a direction perpendicular to the axial direction.

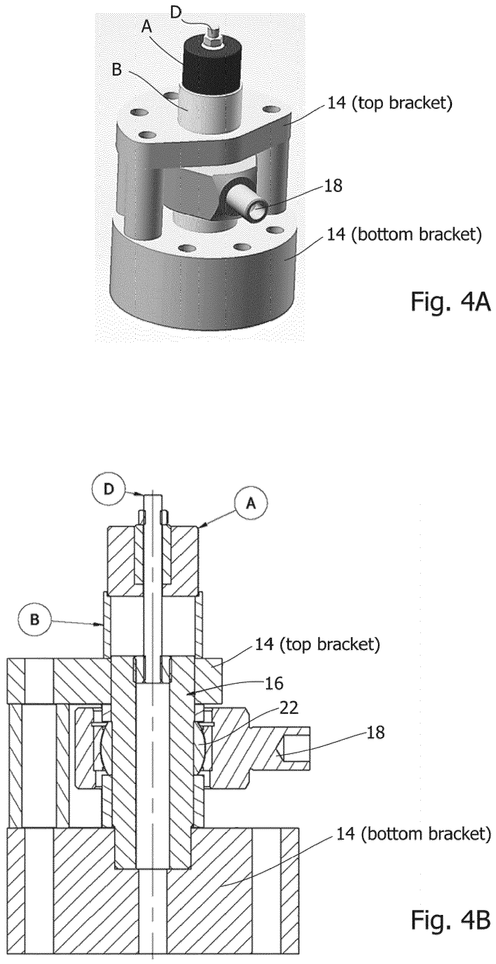

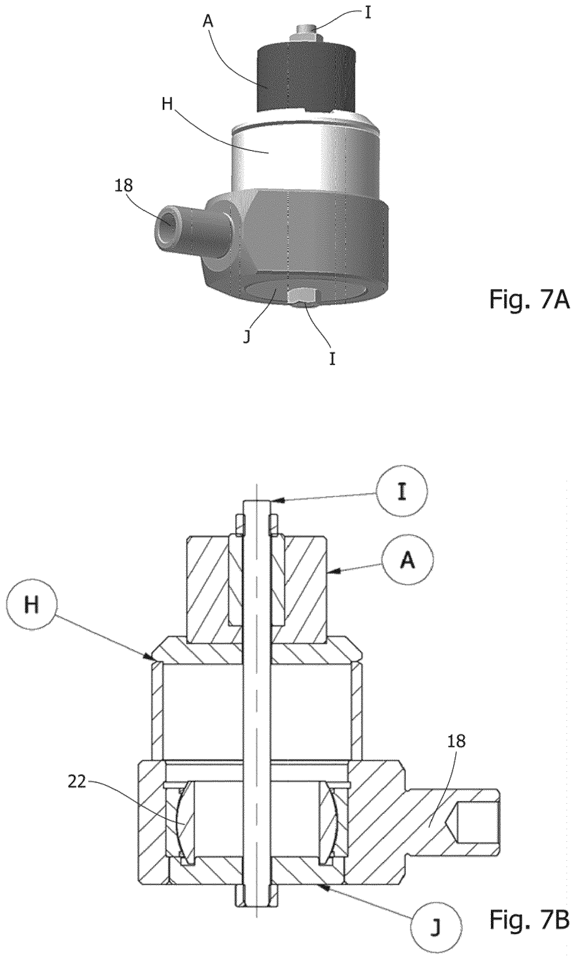

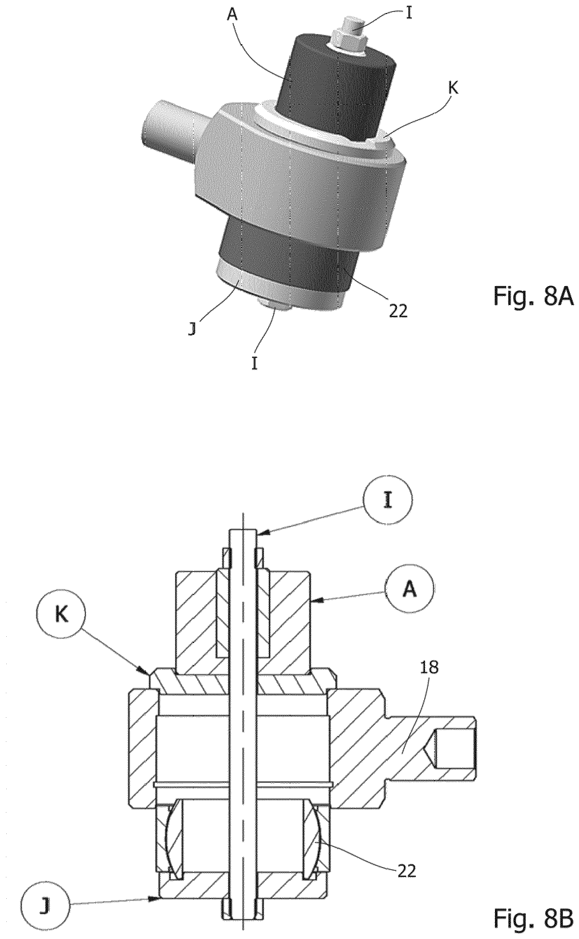

In case the entire hydraulic cylinder needs replacement, one can continue to the procedure for removing the rod end as described with reference to Fig. 4. In case the bore end bearing 23 needs replacement, one can continue to the procedure for bearing replacement, e.g. in analogy to what is described below with reference to Figs. 7 and 8 for the rod end.

Fig.4 shows removal of the mounting point axle 16 at the rod end. The extraction tool for removal of the mounting point axle 16 at the rod end comprises the annular actuator element A, the first tube-shaped distance piece B, and the second tool bolt D.

There is a number of bolts 21, here five, holding the top bracket of the rod end mounting block 14, thus holding, by means of the rod end axle 16, the rod end 18 of the hydraulic cylinder 15 in place. In some cases, the top bracket of a corresponding mounting block needs to be loosened (without actually disassembling the mounting block) in order to be able overcome a shallow rim when later on removing the end of the hydraulic cylinder from its corresponding mounting block in a direction perpendicular to the axial direction, after removal of the respective mounting point axle in the axial direction thereof. To do so, it may be required to get to the blade side of the pitch actuator as discussed above, and loosen the respective mounting block assembly bolts.

Next, a central bolt securing the rod end axle 16 is unscrewed. Then the second tool bolt D is placed to engage the top of the axle 16. The first distance piece B is then placed concentric around the second tool bolt D and on top of the top bracket of the rod end mounting block 14. Finally, the actuator element A is placed on top of the first distance piece B and an engagement nut on the second tool bolt D is tightened to meet the actuator element A.

Removal of the rod end axle 16 is then performed analog to the procedure as discussed above with respect to the bore end axle 17. Once the rod end axle 16 has been removed in the axial direction thereof, the rod end 18 of the hydraulic cylinder 15 can be removed from the rod end mounting block 14 in a direction perpendicular to the axial direction, without actually disassembling the rod end mounting block 14.

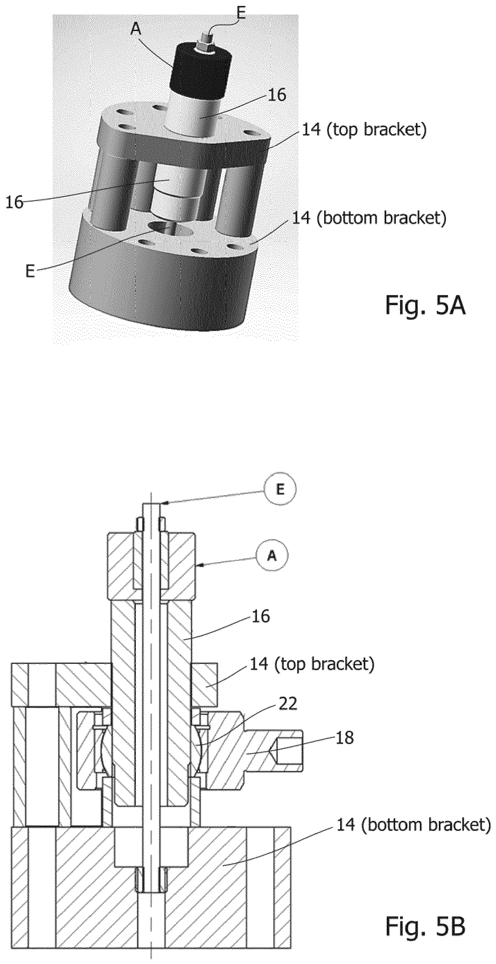

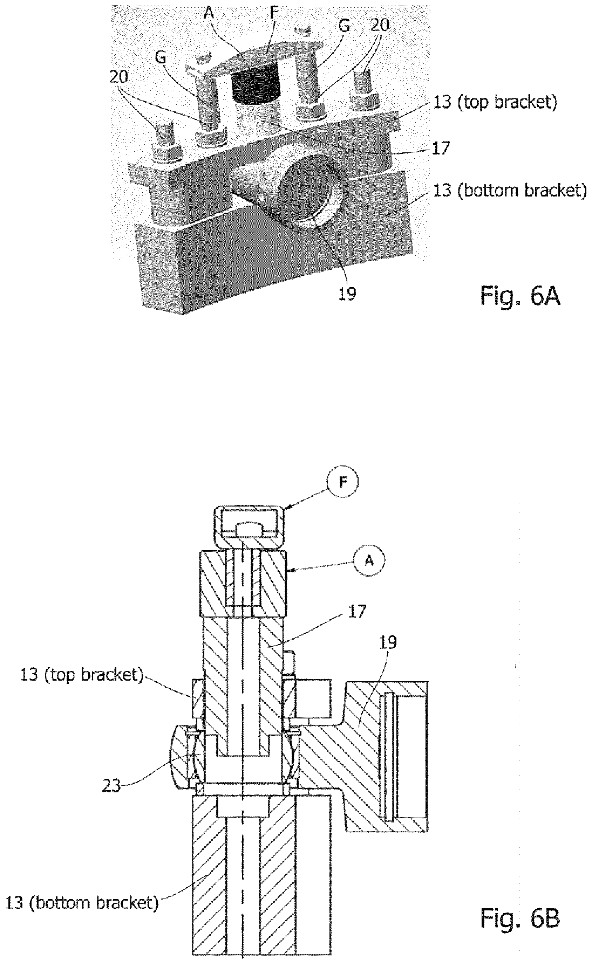

In case the hydraulic cylinder 15 needs replacement, the hydraulic cylinder 15 is now completely released and can be removed from the hub 5 and a replacement cylinder may be installed following the procedures for installing the rod end and the the bore end as described in the following with reference to Figs. 5 and 6, respectively. In case the rod end bearing 22 needs to be exchanged, one may continue to the procedure for bearing replacement as discussed below with reference to Figs. 7 and 8.

Fig.5 shows installation of the mounting point axle 16 at the rod end. The extraction tool for installation of the rod end axle 16 comprises the annular actuator element A, and the third tool bolt E.

The rod end of the hydraulic cylinder 15 is placed in the rod end mounting block 14 aligning the lumen of the rod end bearing 22 with the lumen of the rod end mounting block 14 for receiving the rod end axle 16. Then the third tool bolt E is installed to engage a thread in a bottom plate holding the rod end mounting block 14. The rod end axle 16 is then inserted in an axial direction through the top bracket of the corresponding mounting block 14. The actuator element A is then placed with the primary surface facing down ward towards the axle, and an engagement nut on the third tool bolt E is tightened to meet the secondary surface of the actuator element A. The actuator element A is then deployed to exert an axially oriented pushing force pressing the rod end axle 14 in place. Pressing the rod end axle in place may also be performed in iterations by cyclic repetition of a sequence of a pushing stroke, followed by a recovery stroke, followed by tightening of the engagement nut. In case they were loosened, the bolts 21 holding the top bracket and thus the cylinder and axle need to be tightened again. This requires again accessing the outwardly facing side of the blade pitch actuator as described above. After the steps of tightening the mounting block assembly bolts 21 is completed, the corresponding blade is moved back in the position where it points down.

In case the hydraulic cylinder 15 has been replaced, the (replacement) hydraulic cylinder 15 is now is attached at the rod end 18 and one can continue to the procedure for re-installing the bore end 19.

Fig.6 shows installation of the mounting point axle 17 at the bore end. The extraction tool for installation of the bore end axle 17 comprises the annular actuator element A, the offset bridge F, and attachment bushings G.

The bore end 19 of the hydraulic cylinder 15 is inserted into the bore end mounting block 13 in a direction perpendicular to the axial direction aligning the lumen of the bore end bearing 23 with the lumen of the bore end mounting block 13 for receiving the bore end axle 17. The bore end axle is inserted in the axial direction through the top bracket of the bore end mounting block 13 into the lumen of the bore end bearing 23.

The actuator element A is then placed with the primary surface facing downward towards the axle. The two bushings G are mounted on top of two mounting block assembly bolts 20 next to the axle on either side thereof. The offset bridge F is placed and attached to the top of the bushings G. The offset bridge F seats the secondary surface of the actuator element A and is tightened to provide a counterforce when pressing the bore end axle 17 into position. Analog to the above, the travel required for pressing the axle in place may be provided in a number of repetitive cycles of alternating pushing and recovery strokes, each cycle followed by a tightening of the counterforce seat of the offset bridge F to meet the actuator element A.

Fig.7 shows removal of a mounting point bearing 22, here at the rod end. The extraction tool kit for removal of a rod end and/or bore end mounting point bearing comprises the annular actuator element A, the second tube-shaped distance piece H, the fourth tool bolt I, and the bearing plate J. It is noted that the procedure for removal of a mounting point bearing at the bore end is analog to the procedure for the rod end described here, and is therefore not discussed further here.

The rod end bearing 22 is held by a mounting eye at the rod end of the hydraulic cylinder 15. Typically, the bearing is held in place by a retaining ring, which is removed. The bearing plate J is placed on one side of the bearing. The bearing plate J has a central hole. The fourth tool bolt I is attached to engage the bearing plate J through the central hole. The second tube-shaped distance piece H is placed on the rim of the mounting eye on the side opposite to the side where the bearing plate is placed, concentric to the fourth tool bolt I, and the actuator element A is then placed on top of the second distance piece H. An engaging nut on the fourth tool bolt I is tightened to meet the actuator element A. By deploying the actuator element A, the actuating force is transmitted via the tool bolt I and the bearing plate J to the rod end bearing 22, which thereby is push-pulled out of its seat in the mounting eye and released into the distance piece H. As before, the removal of the bearing can also be performed in iterations of successive pushing and recovery strokes.

Fig.8 shows installation of a replacement mounting point bearing 22 at the rod end. The extraction tool kit for installation of a rod end and/or bore end mounting point bearing comprises the annular actuator element A, the fourth tool bolt I, the bearing plate J, and the third tube-shaped distance piece K. It is noted that the procedure for installation of a mounting point bearing at the bore end is analog to the procedure at the rod end described here, and is therefore not discussed further here.

A replacement bearing is placed on one side of the mounting eye; the bearing plate J is placed on the replacement bearing, and the fourth tool bolt I is attached through the hole in the bearing plate. The third distance piece K is placed on the opposite side of the mounting eye, seated against the rim, concentric with the fourth tool bolt I. The distance piece K serves as offset plate for the actuator element A, which is seated on the distance piece K. The annular actuator element A concentrically receives the fourth tool bolt I through its central hole. The engagement nut on the fourth tool bolt I is tightened to meet the actuator element A. the fourth tool bolt I thus engages the actuator element A. By means of the actuator element, the replacement bearing can then be pulled in place. Like above, this can also been done in iterative cycles.

## Claims

1. Method of servicing a hydraulic cylinder of a hydraulic blade pitch system on-site in an installed wind turbine,
the blade pitch system comprising:
- a fixed part attached to a hub of the wind turbine, and a moveable part carrying a blade; and
- at least one hydraulic cylinder for actuating a rotary movement of the moveable part with respect to the fixed part around a pitch axis,
wherein the hydraulic cylinder comprises at a first end a first bearing and a first axle passing through the bearing in an axial direction parallel to the pitch axis, wherein the first end by means of the first bearing and the first axle is attached to a corresponding first mounting block on one of the moveable part or the fixed part, and
wherein the hydraulic cylinder comprises at a second end a second bearing and a second axle passing through the bearing in the axial direction, wherein the second end by means of the second bearing and the second axle is attached to a corresponding second mounting block on the other one of the moveable part or the fixed part;
the method comprising the steps of:
- expanding the hydraulic cylinder;
- thereafter removing the first axle from the first bearing in the axial direction through the corresponding first mounting block; and
- thereafter contracting the hydraulic cylinder so as to release the first end from the corresponding first mounting block in a direction perpendicular to the axial direction.

2. Method according to claim 1, further comprising the steps of:
- removing the second axle from the hydraulic cylinder in the axial direction through the corresponding second mounting block; and
- thereafter releasing the second end from the second bracket in a direction perpendicular to the axial direction.

3. Method according to claim 1 or claim 2, wherein the step of removing the first axle and/or the second axle from the hydraulic cylinder includes using an extraction tool, wherein the extraction tool comprises:
- an actuator element adapted to exert an actuating force by deploying a primary surface with respect to a secondary surface in a tool deployment direction; and
- one or more adapter elements;
whereby the extraction tool is adapted to seat against the corresponding first or second mounting block, to engage one of the first axle or the second axle, to convert an actuation force exerted by the actuator element into a pulling force, and to apply the pulling force to said first or second axle in the axial direction thereof.

4. Method according to claim 3, wherein the actuator element is a hydraulic actuator element.

5. Method according to any one of claims 3-4, wherein the step of removing the first axle from the hydraulic cylinder includes:
- engaging the first axle with the extraction tool;
- seating the extraction tool against the corresponding first mounting block; and
- actuating the extraction tool so as to remove the first axle from its seat in the first bearing in the axial direction.

6. Method according to any one of claims 3-5, wherein the step of removing the second axle from the hydraulic cylinder includes:
- engaging the second axle with an extraction tool;
- seating the extraction tool against the corresponding second mounting block; and
- actuating the extraction tool so as to remove the second axle from its seat in the second bearing in the axial direction.

7. Method according to any one of claims 3-6, further comprising the steps of:
- engaging the first bearing with the extraction tool;
- seating the extraction tool against a first bearing seat holding the first bearing in the first end of the hydraulic cylinder; and
- actuating the extraction tool so as to remove the first bearing from the first bearing seat in the axial direction.

8. Method according to claim 7, further comprising the steps of:
- placing a first replacement bearing next to the first bearing seat;
- engaging the first replacement bearing with the extraction tool;
- seating the extraction tool against the first bearing seat; and
- actuating the extraction tool so as to insert the first replacement bearing into the first bearing seat in the axial direction.

9. Method according to any one of claims 3-8, further comprising the steps of:
- engaging the second bearing with the extraction tool;
- seating the extraction tool against a second bearing seat holding the second bearing in the second end of the hydraulic cylinder; and
- actuating the extraction tool so as to remove the second bearing from the second bearing seat in the axial direction.

10. Method according to claim 9, further comprising the steps of:
- placing a second replacement bearing next to the second bearing seat;
- engaging the second replacement bearing with the extraction tool;
- seating the extraction tool against the second bearing seat; and
- actuating the extraction tool so as to insert the second replacement bearing into the second bearing seat in the axial direction.

11. Extraction tool kit for use in a method according to any one of the claims 1-10, the extraction tool kit comprising:
- an annular hydraulic actuator element with a central hole oriented in the tool deployment direction;
- a first tool bolt with a proximal end adapted to engage the primary surface of the actuator element, with a diameter adapted to pass through the central hole in the annular actuator element, and a distal end adapted for attachment to the first axle; and
- a first tube-shaped distance piece with a distal end adapted to seat against the corresponding first mounting block, and a proximal end adapted to provide a seating for the secondary surface of the actuator element, wherein the distance piece is shaped and dimensioned to receive the first axle therein.

12. Extraction tool kit according to claim 11, further comprising:
- a second tool bolt with a proximal end adapted to engage the primary surface of the actuator element, with a diameter adapted to pass through a central hole in the annular actuator element, and a distal end adapted for attachment to the second axle, e.g. in a threaded engagement.

13. Extraction tool kit according to claim 11, further comprising:
- a third tool bolt adapted to pass through the first or second axle and for engaging attachment means provided in the bottom of the mounting block lumen for receiving the first or second axle; and/or
- an offset bridge with attachment bushings adapted for attachment to axially projecting mounting block assembly bolts at the top of the mounting block, arranged adjacent to the lumen in the mounting block for receiving the respective first or second axle.

14. Extraction tool kit according to claim 11, further comprising:
- a bearing plate with an outer diameter corresponding to the outer diameter of the first and/or second bearing;
- a fourth tool bolt with a proximal end adapted to engage the primary surface of the actuator element, and a distal end adapted for engaging the bearing plate, and with a diameter adapted to pass through the central hole in the annular actuator element and through the first and/or second bearing when the respective first or second axle is removed; and
- a second tube-shaped distance piece with a distal end adapted to seat against the first and/or the second end of the hydraulic cylinder, and a proximal end adapted to provide a seating for the secondary surface of the actuator element, wherein the second distance piece is shaped and dimensioned to receive the first bearing and/or the second bearing therein.

15. Service kit for servicing a hydraulic cylinder of a blade-pitch system on-site in a wind turbine, the service kit comprising an extraction tool kit according to any one of the claims 11-14, the service kit further comprising replacement parts including one or more of: a first replacement bearing for replacing a first mounting point bearings; a second replacement bearing for replacing a second one of the mounting point bearings; and a replacement hydraulic cylinder for replacing the hydraulic cylinder of the blade pitch system.
